(19) Europäisches Patentamt
European Patent Office
Office européen des brevets

(11) EP 3 438 177 A1

(12) **EUROPEAN PATENT APPLICATION**
published in accordance with Art. 153(4) EPC

(43) Date of publication:
06.02.2019 Bulletin 2019/06

(51) Int Cl.:
C08J 9/28 (2006.01)     C08J 9/00 (2006.01)
C08L 23/06 (2006.01)     H01M 2/16 (2006.01)

(21) Application number: 17774826.6

(22) Date of filing: 24.03.2017

(86) International application number:
PCT/JP2017/012191

(87) International publication number:
WO 2017/170289 (05.10.2017 Gazette 2017/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 31.03.2016 JP 2016072633

(71) Applicant: Toray Industries, Inc.
Tokyo 103-8666 (JP)

(72) Inventors:
• KATADA, Ikki
NasuShiobara-shi
Tochigi 329-2763 (JP)
• KANEKO, Kenji
NasuShiobara-shi
Tochigi 329-2763 (JP)
• NOMURA, Fumiyasu
NasuShiobara-shi
Tochigi 329-2763 (JP)

(74) Representative: Mewburn Ellis LLP
City Tower
40 Basinghall Street
London EC2V 5DE (GB)

(54) **POLYOLEFIN MICROPOROUS MEMBRANE, PRODUCTION METHOD FOR POLYOLEFIN MICROPOROUS MEMBRANE, BATTERY SEPARATOR, AND BATTERY**

(57) Provided are a polyolefin microporous membrane capable of achieving a low shutdown temperature while keeping air permeation resistance sufficiently low, and a method for producing the polyolefin microporous membrane. The polyolefin microporous membrane according to the present invention has, when a temperature is raised to 230 °C at a temperature rise rate of 10 °C/min in differential scanning calorimetry (DSC), a ratio of a melting heat quantity ($\Delta H_{<Tm0}$) of equal to or larger than 95% at temperatures lower than an equilibrium melting point of polyethylene, relative to 100% of the total melting heat quantity ($\Delta H_{all}$).

FIG. 2

**Description**

Technical Field

The present invention relates to a polyolefin microporous membrane and a method for producing the polyolefin microporous membrane, a battery separator, and a battery.

Background Art

Polyolefin microporous membranes have been widely used as separation membranes used for substance separation and selective permeation, for example, and as separator materials for electrochemical elements such as alkali secondary batteries, lithium ion secondary batteries, fuel cells, and capacitors. In particular, polyolefin microporous membranes are suitably used as lithium ion secondary battery separators.

Such lithium ion secondary battery separators perform ion transfer control with a large number of pores to control excessive reactions and provide safety performance for batteries. Furthermore, microporous membranes used for batteries have shutdown properties as an important function. The shutdown properties are such that, when an excessive load is imposed on a battery and the temperature of the battery is increased accordingly, resin melts to cause many micropores to be clogged, whereby ion transfer is stopped, which results in forcible termination of the operation of the battery. In recent years, from the viewpoint of the safety of batteries, low-temperature shutdown properties to sensitively react to abnormal heat generation have been desired. It has been thought that the shutdown properties are dependent on the melt temperature of resin serving as a separator material, and in order to cause a shutdown at low temperatures, it is necessary to lower the melting point of resin constituting a microporous membrane. Thus, various studies for such low-temperature shutdown properties have been conducted.

For example, Patent Literature 1 discloses a method of lowering a shutdown temperature by adding a linear low-density polyethylene (LLDPE) having a short chain branch in a main chain. This method makes use of such an effect that the short chain branch included in the main chain of the LLDPE inhibits crystals from being formed, whereby the melting point of a final resin is lowered.

Citation List

Patent Literature

[Patent Literature 1] Japanese Unexamined Patent Application Publication No. 2013-126765

Summary of Invention

Technical Problem

However, a change of a raw material as described in Patent Literature 1 causes the necessity to considerably change conditions for a membrane-formation process, and in addition, it is known that, in particular, LLDPE causes a decrease in the tensile strength of a microporous membrane, a decrease in pin puncture strength, and an increase (deterioration) in air permeation resistance.

Therefore, the present invention provides a polyolefin microporous membrane capable of achieving a low shutdown temperature while keeping air permeation resistance sufficiently low, and a method for producing the polyolefin microporous membrane.

Solution to Problem

The inventors of the present invention conducted intensive study to solve the above-described problems, and, as a result, they found that the problems can be solved by controlling melting behaviors of fibrils forming a polyolefin microporous membrane, and completed the present invention.

Specifically, a polyolefin microporous membrane according to one embodiment of the present invention is such that, when the temperature is raised to 230 °C at a temperature rise rate of 10 °C/min in differential scanning calorimetry (DSC), the ratio of a melting heat quantity ($\Delta H_{<Tm0}$) at temperatures lower than the equilibrium melting point ($Tm^0$) of polyethylene is equal to or larger than 95%, relative to 100% of a total melting heat quantity ($\Delta H_{all}$).

The reason why the configuration of the present invention enables the above-described problems to be solved is not clear, but can be presumed as follows. A crystalline polyolefin resin composition is kneaded together with a nonvolatile solvent such as liquid paraffin, and once the resultant mixture is heated to a temperature equal to or higher

2

than the melting point, and then casted with a die to be stretched in the width direction, whereby a polyolefin resin sheet (gel-like sheet) is prepared. The thus-prepared polyolefin resin sheet mainly has a lamella structure in which a chain is folded up as a crystal form. When this gel-like sheet is stretched, oriented crystals having higher strength and a higher melting point are produced. It is thought that the polyolefin microporous membrane according to the present invention leaves more lamella structures having a melting point lower than that of oriented crystals. As a result, it is thought that, by having more lamella structures that sensitively react to temperature change, the polyolefin microporous membrane according to the present invention is capable of achieving effects at lower temperatures than in a conventional shutdown region. In the present invention, the melting heat quantity determined from DSC measurement is used as a measure of the content of structures having a low melting point, such as lamella structures, included in the whole of the membrane, and it has been found that, when the melting heat quantity at temperatures equal to or lower than the equilibrium melting point ($Tm^0$, the theoretical melting point of crystals having no defect) of the lamella structures is equal to or smaller than 95% of the total melting heat quantity, both lower shutdown temperature and lower air permeation resistance can be achieved.

Advantageous Effects of the Invention

According to the present invention, a polyolefin microporous membrane achieving a low shutdown temperature while keeping air permeation resistance sufficiently low, and a method for producing the polyolefin microporous membrane, a battery separator, and a battery can be provided.

Brief Description of the Drawings

Fig. 1 is a schematic diagram illustrating an example of a stretching machine for producing a polyolefin microporous membrane according to the present invention.

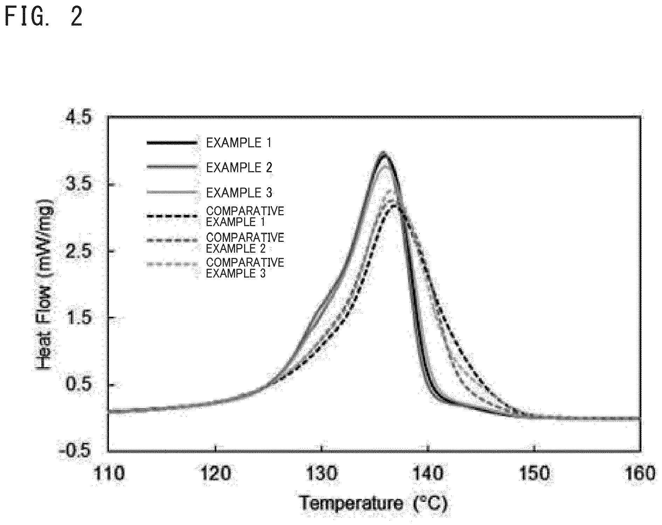

Fig. 2 illustrates DSC curves of polyethylene microporous membranes of Examples and Comparative Examples.

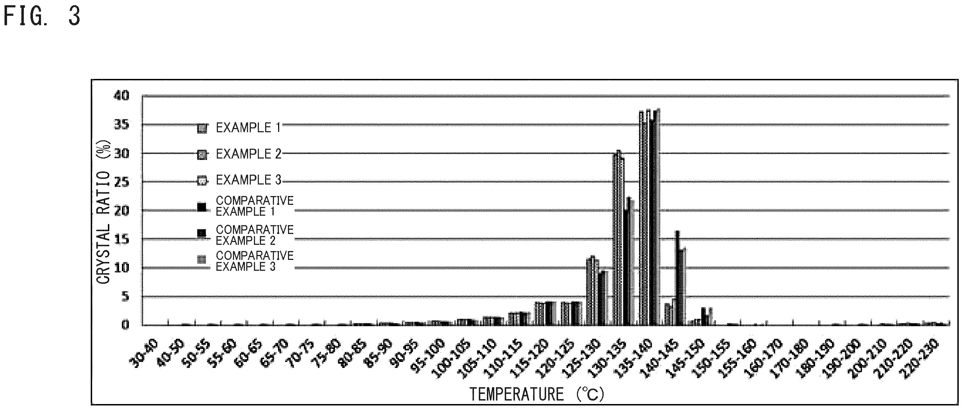

Fig. 3 illustrates ratios of crystals in the polyethylene microporous membranes of Examples and Comparative Examples in various temperature regions.
Fig. 4 illustrates a scanning electron microscopic (SEM) image of a surface of the polyolefin microporous membrane of Example 1.
Fig. 5 is a graph illustrating the relations between the average surface roughnesses and the shutdown temperatures of the polyolefin microporous membranes of Examples and Comparative Examples.
Fig. 6 is a SEM sectional view of the polyolefin microporous membrane of Example 1.

Description of Embodiments

Hereinafter, embodiments of the present invention will be described. Note that the present invention is not limited to the following embodiments. Furthermore, for reasons of description, dimensions or ratios in the drawings are sometimes different from actual ones.

1. Polyolefin Microporous Membrane

A polyolefin microporous membrane according to the present embodiment is such that, when the temperature is raised from 30 °C to 230 °C at a temperature rise rate of 10 °C/min in differential scanning calorimetry (DSC), the ratio of the melting heat quantity ($\Delta H_{<Tm0}$) at temperatures lower than the equilibrium melting point of the polyethylene constituting the polyolefin microporous membrane is equal to or larger than 95%, relative to 100% of the total melting heat quantity ($\Delta H_{all}$).

Polyolefin whose melting heat quantity is observed at temperatures lower than the equilibrium melting point mainly corresponds to a lamellar-crystal or an amorphous portion, and melts at a temperature near the shutdown temperature. When such polyolefin is contained at a ratio of equal to or larger than 95% of the melting heat quantity in DSC measurement, a low shutdown temperature of lower than 134 °C, which is determined by the later-mentioned temperature-rise impedance measurement, can be achieved.

The polyolefin whose melting heat quantity is observed at temperature equal to or higher than the equilibrium melting point is thought to be derived from stretched crystals having a melting point higher than that of a lamella structure. Such polyolefin has a high melting point and does not melt even at a temperature higher than the shutdown temperature, and therefore are preferably present in a certain amount so as to suppress meltdown. The melting heat quantity at temperatures equal to or higher than the equilibrium melting point is larger than 0%, and preferably equal to or larger than 2%. Note that the equilibrium melting point ($Tm^0$) of polyethylene is 141 °C.

(1) Polyolefin Resin

In the present embodiment, the term "polyolefin resin" refers to one polyolefin or a mixture of two or more polyolefins. The term "polyethylene resin" herein refers to polyethylene or a mixture of two or more polyolefins including polyethylene as a main component. The term "polyolefin resin composition" herein refers to a composition in which, besides polyolefin, a polyolefin resin contains a polymer other than polyolefin, and/or an additive. The term "polyolefin resin (composition) solution" herein refers to a solution obtained by mixing a polyolefin resin or a polyolefin resin composition with a solvent. Note that "to contain polyethylene as a main component" means, for example, to contain equal to or more than 90% by mass of polyethylene, relative to the whole of a polyolefin microporous membrane.

The polyolefin microporous membrane according to the present embodiment contains a polyethylene resin composition as a main component. Examples of polyolefin, other than polyethylene, contained in the polyolefin microporous membrane according to the present embodiment include, but are not particularly limited to, polypropylene, poly(4-methyl-pentene-1), ethylene-propylene copolymers, polytetrafluoroethylene, polychlorotrifluoroethylene, polyvinylidene fluoride, polyvinylidene chloride, polyvinyl fluoride, polyvinyl chloride, polysulfone, and polycarbonate. These polyolefins may be used alone or in combination of two or more thereof. Among these polyolefins, polypropylene is preferably used from the viewpoints of strength and melt temperature.

Polyethylene contained in the polyethylene resin serving as a main component of the polyolefin microporous membrane according to the present embodiment may be a copolymer containing a small amount of $\alpha$-olefin, but is preferably a homopolymer from the viewpoints of economical efficiency and membrane strength. The copolymer may contain $\alpha$-olefin other than ethylene, and examples of such $\alpha$-olefin include propylene, butene, pentene, hexene, methylpentene, octene, vinyl acetate, methyl methacrylate, and styrene. The content of such $\alpha$-olefin other than ethylene is preferably equal to or less than 10.0 mol%, relative to 100 mol% of the copolymer. Such a copolymer can be produced by any convenient polymerization process, such as a process using a Ziegler-Natta catalyst or a single-site catalyst.

Polyolefin resins other than polyethylene, namely, polypropylene, polybutene, polypentene, polyhexene, and polyoctene preferably have a weight-average molecular weight Mw of $1 \times 10^4$ to $4 \times 10^6$, and polyethylene wax preferably has a weight-average molecular weight Mw of $1 \times 10^3$ to $1 \times 10^4$.

The content of the polyolefins other than polyethylene in the polyolefin resin may be appropriately adjusted as long as the effects of the present invention are not impaired, but the content is preferably equal to or less than 10 parts by weight, and more preferably less than 5 parts by weight.

The content of the polyethylene resin is preferably equal to or more than 90 parts by weight, more preferably equal to or more than 95 parts by weight, and particularly preferably equal to or more than 99 parts by weight, relative to 100 parts by weight of the polyolefin resin contained in the polyolefin microporous membrane. When the polyethylene content is within the above-mentioned range, the strength of the resulting polyolefin microporous membrane can be improved.

The weight-average molecular weight (Mw) of the polyethylene resin is not particularly limited, but is usually within a range of $1 \times 10^3$ to $1 \times 10^7$, preferably within a range of $1 \times 10^4$ to $5 \times 10^6$, and more preferably within a range of $1 \times 10^5$ to $4 \times 10^6$. Note that the content of polyethylene having an Mw of lower than $1 \times 10^4$ is preferably less than 5 parts by weight, relative to 100 parts by weight of the whole of the polyethylene resin. From the viewpoint of the mechanical strength of the microporous membrane, the content of such a low molecular weight component is preferably less than 5 parts by weight. Note that the Mw of the polyethylene resin refers to the Mw of the polyethylene resin used as a raw material.

Examples of the polyethylene resin used herein may include ultrahigh molecular weight polyethylene, high-density polyethylene, medium-density polyethylene, low-density polyethylene, and linear low-density polyethylene. The high-density polyethylene herein refers to a polyethylene having a density of higher than 0.94 g/cm$^3$. The medium-density polyethylene herein refers to a polyethylene having a density of equal to or higher than 0.93 g/cm$^3$ and equal to or lower than 0.94 g/cm$^3$. The low-density polyethylene herein refers to a polyethylene having a density of lower than 0.93 g/cm$^3$.

In the case where an ultrahigh molecular weight polyethylene is used, from the viewpoint of enhancing the strength of a microporous membrane, the Mw of the ultrahigh molecular weight polyethylene preferably is preferably equal to or higher than $8 \times 10^5$, and more preferably equal to or higher than $1 \times 10^6$. Furthermore, from the viewpoint of the ease of processing such as stretching, the Mw is preferably equal to or lower than $1.5 \times 10^7$, and more preferably equal to or lower than $5 \times 10^6$.

The polyethylene resin composition preferably includes ultrahigh molecular weight polyethylene. The polyethylene resin composition including ultrahigh molecular weight polyethylene further includes at least one polyethylene selected from the group consisting of high-density polyethylene, medium-density polyethylene, low-density polyethylene, and linear low-density polyethylene. From the viewpoint of achieving excellent mechanical strength and excellent moldability, the polyethylene resin composition more preferably includes ultrahigh molecular weight polyethylene and high-density polyethylene. From the viewpoint of further reducing air permeation resistance, the polyethylene resin composition still more preferably includes ultrahigh molecular weight polyethylene and high-density polyethylene, as the polyethylene.

From the viewpoint of mixing processability, the Mws of the high-density polyethylene and the medium-density polyethylene are preferably within a range of equal to or higher than $1 \times 10^4$ and lower than $8 \times 10^5$, and the Mw of the low-density polyethylene is preferably within a range of equal to or higher than $1 \times 10^3$ and lower than $5 \times 10^5$. Note that the Mw of the ultrahigh molecular weight polyethylene refers to the Mw of the polyethylene resin used as a raw material.

In the case where the polyethylene resin composition includes ultrahigh molecular weight polyethylene, from the viewpoint of achieving the effect of improving the strength of a microporous membrane, the lower limit of the content of the ultrahigh molecular weight polyethylene is preferably equal to or more than 1 part by weight, more preferably equal to or more than 10 parts by weight, and particularly preferably equal to or more than 30 parts by weight, relative to 100 parts by weight of the polyethylene resin. Furthermore, from the viewpoint of the ease of extrusion, the upper limit of the content of the ultrahigh molecular weight polyethylene is preferably equal to or less than 90 parts by weight, more preferably equal to or less than 80 parts by weight, and still more preferably equal to or less than 70 parts by weight.

From the viewpoints of extrusion moldability and control of physical properties based on stable crystallization control, the molecular weight distribution (MWD) of the polyethylene resin [the ratio of Mw to number average molecular weight (Mn), Mw/Mn] is preferably equal to or higher than 1.0, and more preferably equal to or higher than 3.0. Furthermore, from the viewpoint of achieving sufficient strength, Mw/Mn is preferably equal to or lower than 300, more preferably lower than 100, still more preferably lower than 10, and particularly preferably lower than 8. To adjust the MWD to the above-mentioned range, the polyethylene resin may be prepared by multistage polymerization.

The melt flow rate (MFR) of the polyethylene resin is preferably equal to or lower than 2.0 g/10 min, and more preferably equal to or higher than 0.01 g/10 min and equal to or lower than 1.0 g/10 min. When the MFR is within the above-mentioned range, a decrease in the mechanical strength, such as the pin puncture strength, of an obtained polyolefin microporous membrane can be avoided. Note that the MFR is a value measured by extruding a molten polymer from a die (8 mm in length, 9.5 mm in outer diameter, 2.095 mm in inner diameter) under a load of 2.16 kg at 190 °C in accordance with JIS K6922-2.

(2) Other Resin Components

The polyolefin microporous membrane according to the present embodiment may include other resin components, as necessary. As the other resin components, heat resistant resin is preferably used. Examples of the heat resistant resin include crystalline resins (including partially crystalline resin) having a melting point of equal to or higher than 150 °C and/or amorphous resins having a glass transition temperature (Tg) of equal to or higher than 150 °C. Here, the Tg is a value measured in accordance with JIS K7121.

Specific examples of the other resin components include polyester; polymethylpentene [PMP or Transparent Polymer X (TPX), melting point: 230 °C to 245 °C]; polyamide (PA, melting point: 215 °C to 265 °C); polyarylene sulfide (PAS); fluororesins, such as vinylidene fluoride homopolymers such as polyvinylidene fluoride (PVDF), olefin fluorides such as polytetrafluoroethylene (PTFE), and copolymers thereof; polystyrene (PS, melting point: 230 °C); polyvinyl alcohol (PVA, melting point: 220 °C to 240 °C); polyimide (PI, Tg: equal to or higher than 280 °C); polyamide imide (PAI, Tg: 280 °C); polyethersulfone (PES, Tg: 223 °C); polyether ether ketone (PEEK, melting point: 334 °C); polycarbonate (PC, melting point: 220 °C to 240 °C); cellulose acetate (melting point: 220 °C); cellulose triacetate (melting point: 300 °C); polysulfone (Tg: 190 °C); and polyetherimide (melting point: 216 °C). The other resin components may be composed of a single resin component or may be composed of a plurality of resin components. The Mw of the other resin components depends on the kinds thereof, but is generally preferably $1 \times 10^3$ to $1 \times 10^6$, and more preferably $1 \times 10^4$ to $7 \times 10^5$. The content of the other resin components in the polyolefin resin composition is appropriately adjusted without departing from the scope of the present invention, but, the other resin components are contained in a range of equal to or less than 10 parts by weight in the polyethylene resin composition.

(3) Crystal Nucleating Agent

The polyolefin microporous membrane according to the present embodiment may include a crystal nucleating agent. The crystal nucleating agent to be used is not limited to a particular agent, and common crystal nucleating agent compounds and common crystal nucleating agent particles that are used for polyolefin resins may be used. The crystal nucleating agent may be a masterbatch obtained by mixing or dispersing a crystal nucleating agent or particles beforehand with/in the polyethylene resin.

The amount of the crystal nucleating agent blended is not particularly limited, but is preferably equal to or more than 0.1 part by weight and equal to or less than 10 parts by weight, relative to 100 parts by weight of the polyethylene resin.

Note that, in the case where the crystal nucleating agent is crystal nucleating agent particles, the blending amount thereof is preferably equal to or more than 0.01 part by weight and equal to or less than 10 parts by weight, and more preferably equal to or more than 0.01 part by weight and equal to or less than 5 parts by weight, relative to 100 parts by weight of the polyethylene resin. This is because, when the amount of crystal nucleating agent particles blended is within the above-mentioned range, dispersibility into the polyethylene resin is improved, and problems in a production process are reduced, which results in excellent economical efficiency. When the crystal nucleating agent is blended, the rate of crystallization is accelerated, and the pore structure of the resulting polyolefin microporous membrane is more uniform and closely packed, whereby the mechanical strength and the withstand voltage characteristics of the membrane are improved.

(4) Other Additives

Note that, in the above-described polyolefin resin composition, various additives, such as antioxidants, ultraviolet absorbents, antiblocking agents, pigments, and dyes, may be blended as necessary, without impairing the object of the present embodiment.

In the case where additives other than the crystal nucleating agent are blended in the polyethylene resin, the blending amount thereof is preferably equal to or more than 0.01 part by weight and less than 10 parts by weight, relative to 100 parts by weight of the polyethylene resin. When the blending amount is equal to or more than 0.01 part by weight, effects of the additives can be sufficiently achieved, and furthermore, the addition amount can be easily controlled at the time of production. From the viewpoints of ensuring productivity and economical efficiency, the blending amount is preferably less than 10 parts by weight.

2. Method for Producing Polyolefin Microporous Membrane

The polyolefin microporous membrane according to the present embodiment can be produced in such a manner that, for example, a gel-like sheet obtained by extrusion-molding a polyethylene resin (composition) solution is stretched while being heated so that the average temperature of the whole of the gel-like sheet becomes equal to or higher than "the melting point of polyethylene - 10 °C" and lower than the melting point thereof at the time of preheating and stretching.

(1) Preparation of Polyethylene Resin Composition

The polyethylene resin (composition) solution may be a molten kneaded material prepared by further blending an appropriate membrane-forming solvent in the polyethylene resin composition and melt-kneading the resultant mixture. The polyethylene resin (composition) solution is preferably the molten kneaded material formed of the polyethylene resin composition and a membrane-forming solvent from the viewpoint that, when the material is made into a microporous membrane, the pore diameter thereof is highly uniform. As a melt-kneading method, for example, methods using a twin-screw extruder that are described in Japanese Patent No. 2132327 and Japanese Patent No. 3347835 may be employed. Melt kneading methods are well-known, and description thereof will be therefore omitted.

The membrane-forming solvent to be added to the polyethylene resin may be aliphatic or cyclic hydrocarbons such as nonane, decane, decalin, p-xylene, undecane, dodecane, and liquid paraffin, or mineral oil distillates having boiling points corresponding to those of the above hydrocarbons. From the viewpoint of stabilizing the content of the membrane-forming solvent in the gel-like sheet, a non-volatile solvent such as liquid paraffin is preferably used.

The blending ratio of the membrane-forming solvent to the polyethylene resin composition is not particularly limited, but the content of the membrane-forming solvent is preferably 70 to 80 parts by weight of the membrane-forming solvent with respect to 20 to 30 parts by weight of the polyethylene resin.

(2) Formation of Gel-like Sheet

The polyethylene resin (composition) solution is supplied from an extruder to a die, and extruded in a sheet form. A plurality of polyethylene resin (composition) solutions having the same or different compositions may be supplied from an extruder to one die, laminated there in a layer form, and extruded in a sheet form.

As a method for the extrusion, any of a flat-die method and an inflation method may be employed. The extrusion temperature is preferably within a range from the melting point of polyethylene to "the melting point + 120 °C". Specifically, the extrusion temperature is preferably 140 °C to 250 °C. The extrusion rate is preferably 0.2 m/min to 15 m/min. By adjusting the amount of the polyethylene resin (composition) solution extruded, the thickness of the gel-like sheet can be adjusted.

In order to avoid that the whole of the gel-like sheet has a temperature equal to or higher than the melting point of polyethylene at the time of preheating before stretching, the lower limit of the thickness of the gel-like sheet is preferably equal to or larger than 100 μm, more preferably equal to or larger than 300 μm, and still more preferably equal to or

larger than 500 μm. From the viewpoint of making membrane thickness after stretching sufficiently small, the upper limit of the thickness of the gel-like sheet is preferably equal to or smaller than 2,000 μm, more preferably equal to or smaller than 1,800 μm, and still more preferably equal to or smaller than 1,500 μm.

As the extrusion method, for example, methods disclosed in Japanese Patent No. 2132327 and Japanese Patent No. 3347835 may be employed.

An extrusion-molding product of the polyethylene resin composition, the product being obtained by extrusion molding, is cooled to form a gel-like sheet. As a method of forming the gel-like sheet, for example, methods disclosed in Japanese Patent No. 2132327 and the Japanese Patent No. 3347835 may be employed. The cooling is preferably conducted at a rate of equal to or higher than 50 °C/min at least until the temperature reaches a gelation temperature. The cooling is preferably conducted until the temperature reaches 25 °C.

(3) Stretching of Gel-like Sheet

Next, the obtained gel-like sheet is stretched in at least one axial direction. After heated, the gel-like sheet is preferably stretched at a pre-determined magnification by using a tenter method, a roll method, an inflation method, or a combination thereof. Although the stretching may be monoaxial stretching or biaxial stretching, biaxial stretching is preferably employed. Examples of the biaxial stretching include simultaneous biaxial stretching, sequential stretching, and multi-stage stretching (for example, a combination of simultaneous biaxial stretching and sequential stretching). Among them, simultaneous biaxial stretching is preferably employed from the viewpoint of avoiding a decrease in production efficiency and inferior quality due to roll contamination caused by contact of the gel-like sheet with a roll.

In the case of monoaxial stretching, the stretching magnification (area stretching magnification) at the time of stretching the gel-like sheet is preferably equal to or more than 2 times, and more preferably 3 to 30 times. In the case of biaxial stretching, the stretching magnification is preferably equal to or more than 9 times, more preferably equal to or more than 16 times, and particularly preferably equal to or more than 25 times. Furthermore, the stretching magnification is preferably equal to or more than 3 times in both the machine and transverse directions (MD and TD), and the stretching magnification in MD and the stretching magnification in TD may be the same or different from each other. When the stretching magnification is equal to or more than 9 times, an improvement in pin puncture strength can be expected. Note that the stretching magnification refers to the area stretching magnification of a microporous membrane immediately before subjected to the following step, based on the gel-like sheet immediately before stretched.

The method for producing the polyolefin microporous membrane according to the present embodiment is characterized in that the gel-like sheet is stretched while being heated so that the average temperature of the whole of the gel-like sheet becomes equal to or higher than "the melting point of the polyethylene resin in the gel-like sheet - 10 °C" and lower than the melting point. It is thought that the temperature of the gel-like sheet is raised to around the melting point immediately before the sheet is stretched, and molecular motility is enhanced accordingly, whereby crystals of a lamella structure, for example, become prone to easily collapse due to an external force, which results in prevention of stretched crystals moderately from being produced at the time of stretching, whereby a large amount of polyethylene having a lower melting point structure can be left.

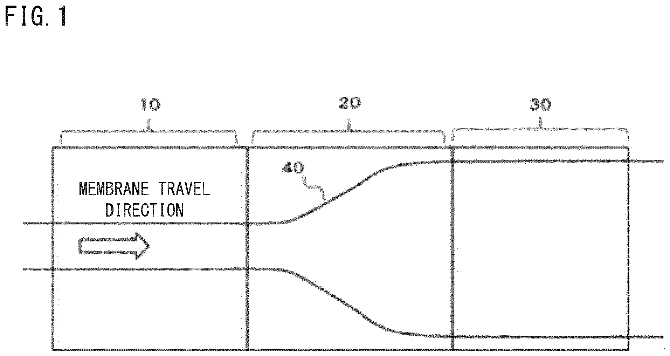

The gel-like sheet can be stretched while being heated by a furnace of a stretching machine. As the furnace of the stretching machine, a furnace having a plurality of zones divided at regular intervals in the longitudinal direction as illustrated in Fig. 1 may be used, and the number of the zones are preferably separated into 3 to 6.

The average of the preset temperatures of the zones (average temperature inside the stretching machine) is equal to or higher than "the melting point (Tm) of the polyethylene resin in the gel-like sheet - 10 °C" and lower than the melting point. When the average temperature inside the stretching machine is lower than "Tm - 10 °C", the melting point of fibril crystals constituting the obtained polyolefin microporous membrane is not sufficiently low, and therefore, such average temperature is not preferable. Furthermore, when the average temperature inside the stretching machine is equal to or higher than the melting point of the polyethylene resin in the gel-like sheet, the gel-like sheet is melted during stretching processing, and thereby becomes difficult to be stretched, and therefore, such average temperature is not preferable. Specifically, the average temperature inside the stretching machine is preferably equal to or higher than 120 °C.

A preheating furnace for performing only the heating of the gel-like sheet before stretching is preferably provided. It is preferable that, at the time of the heating before stretching, the preset temperature of the preheating furnace and the conveyance speed of the sheet are adjusted so that only a surface portion of at least one side of the gel-like sheet has a temperature equal to or higher than the melting point of the polyethylene resin in the gel-like sheet, and only the surface portion of the gel-like sheet is preheated at a temperature equal to or higher than the melting point of polyolefin. With this, a large number of structures having a melting point lower than that of oriented crystals such as a lamella structure can remain in the surface portion.

Note that, in the gel-like sheet containing a membrane-forming solvent, the membrane-forming solvent inhibits the formation of polyethylene crystals and causes the formation of imperfect (low melting point) crystals, and accordingly, the melting point of the polyethylene resin in the gel-like sheet is lower than that of the polyethylene resin by approximately 10 °C. Hence, in the present specification, the melting point of the polyethylene resin in the gel-like sheet refers to "the melting point of the polyethylene resin in a state where a membrane-forming solvent is not contained therein - 10 °C".

The lower limit of the preset temperature of the preheating furnace is preferably equal to or higher than "the melting point of the polyethylene resin in a state where a membrane-forming solvent is not contained therein - 10 °C", more preferably equal to or higher than "the melting point - 7 °C", and particularly preferably equal to or higher than the melting point. The upper limit of the preset temperature of the preheating furnace is preferably equal to or lower than "the melting point + 10 °C", and more preferably equal to or lower than "the melting point + 5 °C".

The heating of the gel-like sheet before stretching is preferably performed in a short time so that only a surface portion of the gel-like sheet has a temperature equal to or higher than the melting point of polyethylene. The surface temperature of the gel-like sheet immediately before stretching is preferably equal to or higher than "the melting point of polyethylene - 10 °C". Specifically, the surface temperature is preferably equal to or higher than 115 °C. The reason why the surface temperature of the gel-like sheet immediately before stretching is preferably equal to or higher than "the melting point of polyethylene - 10 °C" is that the formation of stretched crystals at the time of stretching can be more effectively prevented. The surface temperature of the gel-like sheet can be measured using a radiation thermometer in a non-contact manner.

Examples of a heating method in a first furnace 10 include, but are not limited to, contact with a liquid or gas having a predetermined temperature, infrared irradiation, and pressing using a high-temperature roll or plate. Among them, contact with gas (air) having a predetermined temperature is preferably employed from the viewpoint that damage and contamination hardly occur, and, as adopted in the stretching machine, air having a predetermined temperature is particularly preferably blown to the surface of the gel-like sheet in the preheating furnace. Note that, at this time, air having a predetermined temperature may be blown only to one surface of the gel-like sheet, not on both surfaces thereof.

The stretching temperature is preferably equal to or higher than the crystal dispersion temperature ($T_{cd}$) of polyethylene and equal to or lower than "$T_{cd}$ + 30 °C", more preferably equal to or higher than "$T_{cd}$ + 5 °C" and equal to or lower than "$T_{cd}$ + 28 °C", and particularly preferably equal to or higher than "$T_{cd}$ + 10 °C" and equal to or lower than "$T_{cd}$ + 26 °C". When the stretching temperature is within the above-mentioned range, membrane rupture due to stretching is prevented, and accordingly high-magnification stretching can be achieved. The stretching temperature refers to a preset temperature of a stretching furnace.

The crystal dispersion temperature ($T_{cd}$) is determined by measuring temperature characteristics in dynamic viscoelasticity in accordance with ASTM D4065. Ultrahigh molecular weight polyethylene, polyethylene other than ultrahigh molecular weight polyethylene, and polyethylene resin have a crystal dispersion temperature of approximately 90 °C to 100 °C, and therefore, the stretching temperature is preferably 90 °C to 130 °C, more preferably 110 °C to 120 °C, and still more preferably 114 °C to 117 °C.

The stretching described above causes cleavages in polyethylene lamellar structures, makes a polyethylene phase finer, and forms a large number of fibrils. The fibrils form a mesh structure with three-dimensional irregular linkages.

(4) Removal of Membrane-forming Solvent

The membrane-forming solvent is removed (washed off) using a washing solvent. Since the polyolefin phase is phase-separated from the phase of the membrane-forming solvent, removal of the membrane-forming solvent provides a porous membrane that includes fibrils forming a three-dimensional fine mesh structure and has three-dimensionally irregularly communicating pores (voids). The washing solvent and a method of removing the membrane-forming solvent by using the washing solvent are well known, and therefore descriptions thereof will be omitted. For example, methods disclosed in Japanese Patent No. 2132327 and Japanese Unexamined Patent Application Publication No. 2002-256099 may be employed.

(5) Drying

The microporous membrane from which the membrane-forming solvent has been removed is dried by a heat-drying method or a wind-drying method. The drying temperature is preferably equal to or lower than the crystal dispersion temperature ($T_{cd}$) of the polyethylene resin, and particularly preferably equal to or lower than "$T_{cd}$ - 5 °C". The drying is preferably conducted until the amount of the remaining washing solvent is reduced to equal to or less than 5 parts by weight, and more preferably equal to or less than 3 parts by weight, relative to 100 parts by weight (dry weight) of the microporous membrane.

(6) Second Stretching

The microporous membrane that has been subjected to the removal of the membrane-forming solvent and the drying may be subjected to second stretching to be further stretched in at least one axial direction. While being heated, the microporous membrane may be stretched in the same manner as described above, for example, by a tenter method. The stretching may be monoaxial stretching or biaxial stretching. The biaxial stretching may be any of simultaneous biaxial stretching and sequential stretching.

The stretching temperature in the second stretching is not particularly limited, but is typically 90 °C to 135 °C, and preferably 95 °C to 130 °C.

The lower limit of the stretching magnification (area stretching magnification) of the microporous membrane in a monoaxial direction in the second stretching is preferably equal to or higher than 1.0 time, more preferably equal to or higher than 1.1 times, and still more preferably equal to or higher than 1.2 times. The upper limit is preferably equal to or lower than 1.8 times. In the case of monoaxial stretching, the stretching magnification is 1.0 to 2.0 times in the MD or the TD. In the case of biaxial stretching, the lower limit of the area stretching magnification is preferably equal to or higher than 1.0 time, more preferably equal to or higher than 1.1 times, and still more preferably equal to or higher than 1.2 times. The upper limit is preferably equal to or lower than 3.5 times. The stretching magnification is 1.0 to 2.0 times in each of the MD and the TD. The stretching magnification in the MD and the stretching magnification in the TD may be the same or differed from each other. Note that the stretching magnification in the second stretching refers to the stretching magnification of the microporous membrane immediately before subjected to a step subsequent to the second stretching, based on the microporous membrane immediately before subjected to the second stretching.

(7) Heat Treatment

The dried microporous membrane may be heat-treated. The heat treatment stabilizes crystals and makes lamella structures uniform in size. As a method for the heat treatment, thermal fixing and/or heat-relaxing may be employed. The thermal fixing is a heat treatment to heat a membrane while retaining the membrane so as not to change the size of the membrane. The heat-relaxing is a heat treatment to heat-shrink a membrane in the MD or the TD during heating. The thermal fixing is performed preferably by a tenter method or a roll method. The thermal-fixing temperature is preferably equal to or higher than "$T_{cd}$ - 20 °C" and lower than the melting point $T_m$.

(8) Crosslinking Treatment, Hydrophilization Treatment

Crosslinking treatment or hydrophilization treatment may be further applied to the microporous membrane after bonding and stretching. For example, crosslinking treatment may be applied to the microporous membrane by irradiating the membrane with ionizing radiation, such as $\alpha$-rays, $\beta$-rays, $\gamma$-rays, or electron beams. In the case of irradiation with electron beams, the dose of electron beams is preferably 0.1 Mrad to 100 Mrad, and the accelerating voltage is preferably 100 kV to 300 kV. The meltdown temperature of the microporous membrane is increased by the crosslinking treatment.

Hydrophilization treatment can be performed by, for example, monomer graft, surfactant treatment, or corona discharge. Monomer graft is preferably performed after crosslinking treatment.

3. Laminated Microporous Membrane (Multi-layer Microporous Membrane)

In another embodiment of a polyolefin microporous membrane according to the present embodiment, the microporous membrane may be a laminated porous membrane (multi-layer porous membrane) provided with a porous layer on at least one surface of the membrane. In particular, in the case where the surface of the polyolefin microporous membrane according to the present invention is formed of an aggregate of a large number of curved leaf-like (petal-like) structures that irregularly combine with each other, a degree of increase in air permeation resistance can be kept small even when a coating solution is applied to form the porous layer while the adhesion between the porous layer and the polyolefin microporous membrane is retained. Thus, both excellent ion permeability and excellent heat resistance are achieved.

Examples of the porous layer may include a porous layer formed using, for example, a filler-containing resin solution containing a filler and a resin binder, or a heat-resistant-resin solution.

As the filler, known conventional inorganic fillers and organic fillers such as crosslinked polymer fillers may be used. The filler performs, with its heat resistance, the function of supporting and reinforcing the polyolefin microporous membrane, and therefore, the glass transition temperature or melting point of the constituent resin is preferably equal to or higher than 150 °C, more preferably equal to or higher than 180 °C, still more preferably equal to or higher than 200 °C, and most preferably equal to or higher than 210 °C, and it is not necessary to provide an upper limit. When the glass transition temperature is higher than a decomposition temperature, the decomposition temperature is only required to be within the above-mentioned range. When the lower limit of the glass transition temperature or the melting point of the resin constituting the porous membrane is within the above-mentioned preferred range, a sufficient thermal-rupture-resistant temperature is achieved, whereby high safety can be ensured. Furthermore, preferred examples of the filler include fillers that have high electrical insulation properties and are electrochemically stable when used for lithium ion secondary batteries. Such fillers may be used alone or in combination of two or more thereof.

The average particle diameter of the filler is not particularly limited, but preferably equal to or larger than 0.1 $\mu$m and equal to or smaller than 3.0 $\mu$m.

From the viewpoint of heat resistance, the content of the filler in the porous layer (weight fraction) is preferably equal to or more than 50% and equal to or less than 99.99%.

As the resin binder, the polyolefin mentioned in the description of the other resin components included in the polyolefin resin, and heat resistant resins can be suitably used.

From the viewpoint of binding between the filler and the resin binder, the ratio of the resin binder relative to the total amount of the filler and the resin binder is preferably equal to or higher than 0.5% and equal to or lower than 8% in terms of volume fraction.

As the heat resistant resin, the same resins as the heat resistant resins mentioned in the description of the other resin components included in the polyethylene resin composition may be suitably used.

A method for applying the filler-containing resin solution and the heat-resistant-resin solution onto the surface of the polyolefin microporous membrane is not particularly limited as long as a method such as a gravure coater method can achieve a required layer thickness and a required coated area.

A solvent for the filler-containing solution or the heat-resistant-resin solution is preferably a solvent that can be removed from a solution applied to the polyolefin microporous membrane, and is not limited to a particular solvent. Specific examples of the solvent include N-methylpyrrolidone, N,N-dimethylformamide, N,N-dimethylacetamide, water, ethanol, toluene, hot xylene, methylene chloride, and hexane.

A method for removing the solvent is not particularly limited as long as the method does not have an adverse effect on the polyolefin microporous membrane. Specific examples of the removal method include a method of drying the polyolefin microporous membrane at a temperature equal to or lower than the melting point thereof while fixing the membrane, a method of drying the membrane under reduced pressure, and a method of immersing the membrane into a poor solvent of the resin binder or the heat resistant resin to solidify the resin and, at the same time, extracting the solvent.

From the viewpoint of improving heat resistance, the thickness of the porous layer is preferably equal to or larger than 0.5 $\mu$m and equal to or smaller than 100 $\mu$m.

In the laminated porous membrane of the present embodiment, the ratio of the thickness of the porous layer relative to the thickness of the laminated porous membrane may be suitably adjusted for use, as necessary. Specifically, the ratio is, for example, preferably equal to or higher than 15% and equal to or lower than 80%, and more preferably equal to or higher than 20% and equal to or lower than 75%.

Furthermore, the porous layer may be formed in one surface of the laminated porous membrane, or may be formed in both surfaces thereof.

A battery separator according to the present invention has such a relation that the difference (Y - X) between the air permeation resistance of the polyolefin microporous membrane (X sec/100 cc Air) and the air permeation resistance of the laminated porous membrane (Y sec/100 cc Air) is 20 sec/100 cc Air $\leq$ (Y - X) $\leq$ 100 sec/100 cc Air. When (Y - X) is smaller than 20 sec/100 cc Air, sufficient adhesion of the heat resistant resin layer cannot be achieved. Furthermore, when (Y - X) exceeds 100 sec/100 cc Air, air permeation resistance is considerably increased, and as a result, when the separator is incorporated into a battery, ion permeability is decreased, and thus, the separator is unsuitable for advanced batteries.

The air permeation resistance of the battery separator is one of the most important properties, and is preferably 500 to 600 sec/100 cc Air, more preferably 100 to 500 sec/100 cc Air, and most preferably 100 to 400 sec/100 cc Air. When the air permeation resistance is within the above-mentioned preferred range, sufficient insulation properties are provided, and clogging of foreign substances, short circuit, and membrane rupture are difficult to occur; at the same time, the membrane resistance is not too high, and charge and discharge properties and lifetime properties in a practical range are provided.

In the present invention, peeling strength F(A/B) at the interface between a porous membrane A and a porous membrane B needs to satisfy F(A/B) $\geq$ 1.0 N/25 mm. "Excellent adhesion" as described in the present invention means that peeling strength F(A/B) is equal to or higher than 1.0 N/25 mm, preferably equal to or higher than 1.5 N/25 mm, and more preferably equal to or higher than 2.0 N/25 mm. The above-mentioned F(A/B) corresponds to adhesion of the porous membrane B to the porous membrane A, and when F(A/B) is lower than 1.0 N/25 mm, the heat resistant resin layer may be peeled off during high-speed processing in the battery assembly process.

4. Battery Separator

The polyolefin microporous membrane according to the present embodiment can be suitably used for both batteries including an aqueous electrolyte solution and batteries including a non-aqueous electrolyte. Specifically, the polyolefin microporous membrane can be preferably used as a separator for secondary batteries, such as nickel-hydrogen batteries, nickel-cadmium batteries, nickel-zinc batteries, silver-zinc batteries, lithium ion secondary batteries, and lithium polymer secondary batteries. Among them, the polyolefin microporous membrane is preferably used as a separator for lithium ion secondary batteries.

Lithium ion secondary batteries include a cathode and an anode that are laminated with a separator interposed therebetween, the separator containing an electrolytic solution (an electrolyte). The electrode can be of any known conventional structure, and not limited to particular structures. The electrode structure may be, for example, an electrode structure (coin type) in which a disc-shaped cathode and a disc-shaped anode are arranged to face each other, an electrode structure (laminate type) in which a flat-plate-shaped cathode and a flat-plate-shaped anode are alternately laminated, or an electrode structure (winding type) in which a ribbon-shaped cathode and a ribbon-shaped anode are wound.

A current collector, a cathode, a cathode active material, an anode, an anode active material, and an electrolyte solution that are to be used for lithium ion secondary batteries are not limited to particular ones, and any appropriate combination of known conventional materials may be used.

Note that the present invention is not limited to the above-described embodiments, and various modifications may be made within the scope of the present invention.

5. Structure and Physical Properties of Polyolefin

Microporous Membrane

The physical properties, such as membrane thickness, porosity, pore size, shutdown temperature, and air permeation resistance, of the polyolefin microporous membrane according to the present embodiment are not particularly limited, but are preferably adjusted to be within the following ranges.

(1) Shutdown Temperature

The polyolefin microporous membrane according to the present embodiment is a polyolefin microporous membrane including a polyethylene resin composition as a main component, and is such that, when the temperature is raised to 230 °C at a temperature rise rate of 10 °C/min in differential scanning calorimetry (DSC), the ratio of the melting heat quantity ($\Delta H_{<Tm0}$) at temperatures lower than the equilibrium melting point ($Tm^0$) of polyethylene is equal to or larger than 95%, relative to 100% of the total melting heat quantity ($\Delta H_{all}$), and thus, the shutdown temperature is remarkably lower than that of a conventional polyolefin microporous membrane.

The polyolefin microporous membrane according to the present embodiment has a shutdown temperature, measured by temperature-rise impedance measurement, of lower than 134 °C, and preferably lower than 132 °C. A shutdown temperature of lower than 134 °C allows a high shutdown response at overheating to be achieved when the polyolefin microporous membrane is used as a separator for lithium batteries.

(2) Ratio of Melting Heat Quantity

The polyolefin microporous membrane according to the present invention is such that the lower limit of the ratio of the melting heat quantity ($\Delta H_{<Tm0}$) at temperatures lower than the equilibrium melting point ($Tm^0$) of polyethylene is equal to or larger than 95%, and preferably equal to or larger than 97%. When the ratio of the melting heat quantity ($\Delta H<_{Tm0}$) at a temperature lower than the equilibrium melting point ($Tm^0$) of polyolefin is smaller than 95%, a relative amount of polyolefin structures having a low melting point, such as lamella structures, is not enough to sufficiently reduce a shutdown temperature. Note that the equilibrium melting point of the polyethylene resin serving as a main component of the polyolefin microporous membrane according to the present embodiment may be 141 °C.

In one preferred embodiment of the present invention, when the temperature is raised to 230 °C at a temperature rise rate of 10 °C/min in differential scanning calorimetry (DSC), $\Delta H_{135-140°C}$ is larger than $\Delta H_{140-145°C}$ by 25% or more relative to 100% of the total melting heat quantity ($\Delta H_{all}$), and thus, the region of oriented crystals serving as high-melting-point crystals is considerably reduced, and molecular motility is enhanced, whereby the material can be easily relaxed, which results in the effect of reducing thermal shrinkage.

In one preferred embodiment of the present invention, when the temperature is raised to 230 °C at a temperature rise rate of 10 °C/min in differential scanning calorimetry (DSC), the melting heat quantity in a temperature range of equal to or higher than 130 °C and lower than 135 °C ($\Delta H_{130-135°C}$) is preferably equal to or larger than 23%, more preferably equal to or larger than 25%, and still more preferably equal to or larger than 28%, relative to 100% of the total melting heat quantity ($\Delta H_{all}$). When $\Delta H_{130-135°C}$ is equal to or larger than 23%, the relative amount of polyolefin structures having a low melting point around the shutdown temperature is increased, whereby the shutdown temperature can be easily lowered.

In one preferred embodiment of the present invention, the ratio of $\Delta H_{\geq Tm0}$ is preferably equal to or larger than 2%, and more preferably equal to or larger than 2.5%. When the ratio of $\Delta H_{\geq Tm0}$ is equal to or larger than 2%, a sufficient amount of high strength polyolefin structures, such as stretched crystals, is achieved, whereby meltdown temperature can be preferably easily secured.

(3) Air Permeation Resistance

The polyolefin microporous membrane according to the present embodiment can provide both a low shutdown temperature and a low air permeation resistance. From the viewpoint of ion permeability, the upper limit of the air permeation resistance of the polyolefin microporous membrane according to the present embodiment is preferably equal to or lower than 300 sec/100 cc, more preferably equal to or lower than 200 sec/100 cc, still more preferably equal to or lower than 150 sec/100 cc, and further still more preferably equal to or lower than 140 sec/100 cc, when the membrane thickness is taken as 12 μm. When the air permeation resistance is equal to or lower than 300 sec/100 cc, ion permeability is sufficiently ensured, and thus, electric resistance when the membrane is used as a battery separator can be kept low. Furthermore, the lower limit of the air permeation resistance is equal to or higher than 30 sec/100 cc, preferably equal to or higher than 50 sec/100 cc, and more preferably equal to or higher than 60 sec/100 cc. When the air permeation resistance is equal to or higher than 30 sec/100 cc, the membrane is prevented from having an excessively sparse structure, and thus, in the case where the membrane is used as a battery separator, a prompt shutdown can be ensured when a temperature inside a battery increases.

(4) Surface State

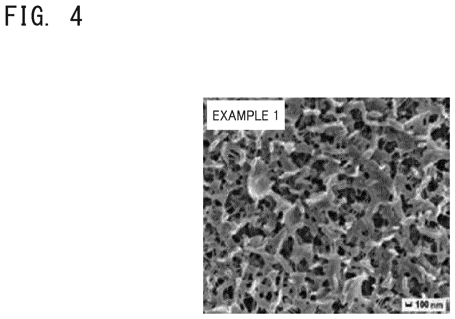

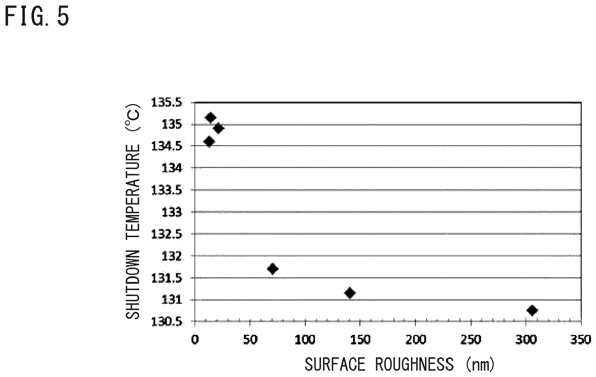

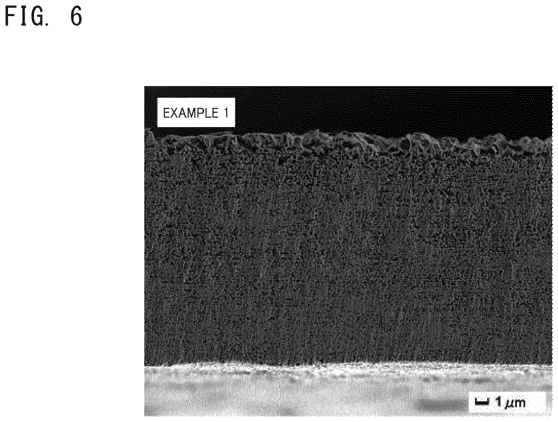

At least a part of a surface of the polyolefin microporous membrane according to the present embodiment may be formed of an aggregate of a plurality of curved leaf-like (petal-like, sheet-like) structures that irregularly combine with each other. When at least a part of the surface is formed of the above-described leaf-like structure, the surface roughness on the leaf-like structure side is preferably equal to or larger than 40 nm. As illustrated in Fig. 4, the aggregate of the leaf-like structures has a structure having continuous micropores like an open-celled structure, and a portion corresponding to the cellular wall of an open-celled structure forms the leaf-like structure. This leaf-like structure is a leaf-like, petal-like, or sheet-like, structure of curved amorphous form, and has a curved amorphous-form surface having a sufficiently large area relative to the thickness. The leaf-like structures irregularly combine while being entangled with each other, and, for example, the structures share their surfaces and sides, and combine with each other via a filamentous object, thereby forming an aggregate. The thickness of one piece of the leaf-like structure is approximately 10 nm to 100 nm.
From the viewpoint of achieving sufficient effects in shutdown reduction, the lower limit of the thickness of a surface portion formed of the aggregate of the leaf-like (petal-like, sheet-like) structures is preferably equal to or larger than 3%, and more preferably equal to or larger than 5%, relative to the thickness of the polyolefin microporous membrane according to the present embodiment. Furthermore, from the viewpoint of ensuring sufficient strength, the upper limit is preferably equal to or smaller than 20%, more preferably equal to or smaller than 15%, still more preferably equal to or smaller than 10%, and particularly preferably equal to or smaller than 9%. The thickness of the surface portion formed of the aggregate of the leaf-like (petal-like) structures can be measured from a sectional image (30,000 times) of the membrane by a scanning electron microscope (SEM).
The average pore size of the surface portion formed of the aggregate of the leaf-like structures is different from those of other portions. The average pore size of the surface portion formed of the aggregate of the leaf-like structures is preferably larger than 0.1 μm, more preferably equal to or larger than 0.12 μm, and still more preferably equal to or larger than 0.15 μm. The upper limit of the average pore size is not particularly limited, but, from the viewpoint of preventing the growth of a dendrite, is preferably equal to or smaller than 2 μm, more preferably equal to or smaller than 1 μm, and still more preferably equal to or smaller than 0.5 μm. Portions other than the surface portion formed of the aggregate of the leaf-like structures have a closely packed three-dimensional fine mesh structure formed of fiber fibrils, and have an average pore size of preferably equal to or larger than 0.01 μm, and more preferably equal to or larger than 0.03 μm in order to ensure a sufficiently low air permeation resistance. The upper limit of the average pore size of the portions other than the surface portion formed of the aggregate of the leaf-like structures is not particularly limited, but is preferably equal to or smaller than 0.10 μm, and more preferably equal to or smaller than 0.085 μm.
A part of at least one surface of the microporous membrane according to the present embodiment may be formed of an aggregate of leaf-like structures. Preferably equal to or more than 90% of the at least one surface is formed of an aggregate of leaf-like structures, and more preferably 100% of the at least one surface is formed of an aggregate of leaf-like structures.
A SEM image in Fig. 4 reveals that the surface of the polyethylene microporous membrane of Example 1 is covered with an aggregate of a large number of curved leaf-like (petal-like, sheet-like) polyethylene structures that irregularly combine with each other. The SEM image of the surface of the microporous membrane in Fig. 4 and a graph illustrating a relation between surface roughness and shutdown temperature in Fig. 5 reveal that, as a value of surface roughness is larger, a shutdown temperature is lower. Furthermore, from a sectional view of the polyethylene microporous membrane in Fig. 6, it can be observed that remelting of a gel-like sheet surface in preheating has caused only a surface portion of the membrane to be remelted. This remolten surface portion forms an aggregate of leaf-like structures as described above.

In the case where at least one surface of the polyolefin microporous membrane of the present embodiment is formed of an aggregate of leaf-like structures, the lower limit of the surface roughness of the surface covered with the leaf-like structures is preferably equal to or larger than 40 nm, more preferably equal to or larger than 50 nm, and still more preferably equal to or larger than 70 nm. The reason why the surface roughness is preferably equal to or larger than 40 nm is that the surface portion of the polyolefin microporous membrane includes a large number of structures having a melting point equal to or lower than an equilibrium melting point, such as lamella structure, and accordingly, a lower shutdown temperature can be achieved. Furthermore, the upper limit of surface roughness is not particularly limited, but is preferably equal to or smaller than 180 nm, more preferably equal to or smaller than 160 nm, still more preferably equal to or smaller than 120 nm, and particularly preferably equal to or smaller than 100 nm. The surface roughness is preferably equal to or smaller than 180 nm from the viewpoint of easily ensuring sufficient membrane strength. Note that surface roughness can be measured using a later-mentioned atomic force microscope.

(5) Heat Shrinkage Rate (105 °C, after 8 hours)

The heat shrinkage rate (105 °C, 8 hours) of the polyolefin microporous membrane according to the present embodiment is not particularly limited, but is preferably equal to or lower than 8%, more preferably equal to or lower than 5%, and particularly preferably equal to or lower than 3% in both the machine direction (MD) and the lateral direction (TD). When the heat shrinkage rate (105 °C, 8 hours) is equal to or lower than 8%, in the case where the membrane is used as a separator for lithium batteries, short circuit due to membrane rupture is less likely to occur at the time of heat generation.

(6) Heat Shrinkage Rate (120 °C)

The upper limit of the heat shrinkage rate (120 °C) of the polyolefin microporous membrane according to one embodiment of the present invention is preferably equal to or lower than 2%, more preferably equal to or lower than 1.0%, still more preferably equal to or lower than 0.5%, and particularly preferably equal to or lower than 0.1% in both the machine direction (MD) and the lateral direction (TD). The lower limit of the heat shrinkage rate (120 °C) is preferably equal to or higher than -2%, more preferably equal to or higher than -1.0%, and still more preferably equal to or higher than -0.3%. A temperature of 120 °C is generally within the range of temperature that lithium ion secondary batteries reach during charge and discharge, and hence, with a heat shrinkage rate within the above-mentioned range, when the polyolefin microporous membrane according to the present invention is used as a separator for a lithium ion battery, excellent high-temperature safety can be given to the battery. Specifically, since the shrinkage of the polyolefin microporous membrane inside a battery is sufficiently small, when the battery is in a high temperature state, electrodes can be prevented from coming into contact with each other inside the battery and causing an internal short circuit.

(7) Porosity

From the viewpoints of improvement in membrane strength and withstand voltage characteristics, the upper limit of the porosity of the polyolefin microporous membrane of the present embodiment is equal to or lower than 60%, and preferably equal to or lower than 50%. Furthermore, from the viewpoints of ion permeability, such as lithium ion permeability, and electrolyte content, the lower limit of the porosity is preferably equal to or higher than 20%, more preferably equal to or higher than 30%, and particularly preferably equal to or higher than 40%. When the porosity is within the above-mentioned range, ion permeability, membrane strength, and electrolyte solution content are suitably balanced, and nonuniformity of battery reactions is eliminated, and as a result, the generation of a dendrite is prevented. Furthermore, defects in a membrane structure are reduced, and accordingly, the withstand voltage characteristics are improved. In other words, a lithium ion secondary battery including the polyolefin microporous membrane of the present embodiment as a battery separator is excellent in safety, strength, and permeability. A method of measuring the porosity will be described later.

Although the porosity of the polyolefin microporous membrane can be adjusted by a known conventional method, the porosity may be adjusted by controlling the crystallization speed of a mixture and making polyolefin resin crystals finer by a crystal nucleating agent or other agents, or adjusted by controlling temperature and stretching conditions.

(8) Mean-flow Pore Size

From the viewpoints of improvement in membrane strength and withstand voltage characteristics, the upper limit of the mean-flow pore size of the polyolefin microporous membrane of the present embodiment is preferably equal to or smaller than 300 nm, more preferably equal to or smaller than 100 nm, still more preferably equal to or smaller than 50 nm, and particularly preferably equal to or smaller than 40 nm. The lower limit of the mean-flow pore size of the polyolefin microporous membrane of the present embodiment is not particularly limited, but, from the viewpoint of the later-described relation with air permeation resistance, the lower limit is preferably equal to or larger than 5 nm, more preferably equal to or larger than 10 nm, and particularly preferably equal to or larger than 20 nm. When the mean-flow pore size of the polyolefin microporous membrane of the present embodiment is within the above-mentioned range, the microporous membrane has a closely packed structure, and accordingly, the microporous membrane can provide high strength and high withstand voltage characteristics.

(9) Maximum Pore Size

From the viewpoints of improvement in membrane strength and withstand voltage characteristics, the upper limit of the maximum pore size of the polyolefin microporous membrane of the present embodiment is preferably equal to or smaller than 500 nm, more preferably equal to or smaller than 300 nm, and still more preferably equal to or smaller than 80 nm. The lower limit of the maximum pore size of the polyolefin microporous membrane of the present embodiment is not particularly limited, but, from the viewpoint of the later-described relation with air permeation resistance, the lower limit is preferably equal to or larger than 1 nm, and more preferably equal to or larger than 5 nm. When the maximum pore size of the polyolefin microporous membrane of the present embodiment is within the above-mentioned range, the membrane has a closely packed structure, and accordingly, the microporous membrane can provide high strength and high withstand voltage characteristics.

The maximum pore size and the mean-flow pore size of the polyolefin microporous membrane can be measured using for example, a perm porometer (CFP-1500A, manufactured by Porous Materials Inc.) in the order of Dry-up measurement and then Wet-up measurement. In the Wet-up measurement, a pressure is applied to the microporous membrane sufficiently dipped in Galwick (trade name), manufactured by Porous Materials Inc., which has a known surface tension, and a pore size converted from a pressure at which air begins to permeate is regarded as the maximum pore size.

The mean-flow pore size is obtained by conversion from a pressure at the point of intersection of a curve having half the inclination of a pressure-flow rate curve in the Dry-up measurement and a curve in the Wet-up measurement. For the conversion of a pressure into a pore size, the following equation can be used.

$$\text{Equation: } d = C \cdot \gamma / P$$

(In the equation above, "d ($\mu$m)" is the pore size of the microporous membrane; "y (mN/m)" is the surface tension of a liquid; "P (Pa)" is a pressure; and "C" is a constant.

The mean-flow pore size and the maximum pore size of the polyolefin microporous membrane can be adjusted by controlling the crystallization speed of a mixture and making polyolefin resin crystals finer by a crystal nucleating agent or other agents, or adjusted by controlling temperature and stretching conditions.

(10) Pin Puncture Strength

In the case where the membrane thickness of the polyolefin microporous membrane is 20 $\mu$m, the pin puncture strength is preferably equal to or higher than 300 gf, and more preferably equal to or higher than 350 gf from the viewpoint of preventing a pinhole from being produced when the membrane is incorporated into an electrode for a lithium ion secondary battery.

The pin puncture strength in the case where the membrane thickness of the polyolefin microporous membrane is 20 $\mu$m can be adjusted by controlling the crystallization speed of a mixture and making polyolefin resin crystals finer by a crystal nucleating agent or other agents, or adjusted by controlling temperature and stretching conditions.

(11) Membrane Thickness

The membrane thickness of the microporous membrane of the present embodiment is preferably 1 um to 30 $\mu$m, and more preferably 1 um to 20 $\mu$m. A method of measuring the membrane thickness will be described later.

Examples

Effects achieved by the present invention will be described using the following Examples and Comparative Examples. Note that the technical scope of the present invention is not limited to the following Examples. Test methods for the Examples are as follows.

(1) Shutdown Temperature

Shutdown temperature was determined by temperature-rise impedance measurement. Using solartron SI1250 (FREQUENCY RESPONSE ANALYZER) and SI1287 (ELECTROCHEMICAL INTERFACE), the measurement was conducted inside a glove box by using a polyethylene microporous membrane having a size of 75 (MD) $\times$ 100 (TD) mm$^2$ as a sample. As an electrolyte solution, a 1 mol/L LiPF$_6$ solution (EC:EMC = 4:6 V%) was used (LiPF$_6$: lithium hexafluorophosphate, EC: ethylene carbonate, EMC: ethyl methyl carbonate). The measurement was conducted under the condition that the temperature was raised from room temperature to 200 °C for 30 minutes. The temperature of the sample was raised in a thermostatic chamber by using a temperature recorder. A temperature at the time when an impedance value reached to 10$^3$ $\Omega$/cm$^2$ was defined as a shutdown temperature, and evaluated.

(2) Differential Scanning Calorimetry (DSC)

The analysis was conducted in a nitrogen atmosphere by using a PYRIS Diamond DSC, manufactured by Parking Elmer. A sample having a weight of approximately 5.5 mg to 6.5 mg was sealed into an aluminum sample-pan. The sample was set in the apparatus, and then maintained at 30 °C for 1 minute. After the values were confirmed to be constant, the temperature was raised from 30 °C to 230 °C at 10 °C/min. The melting point ($T_m$) of the microporous membrane was read from a melting endothermic peak, taking a straight line connecting a point at 40 °C and a point at 200 °C as a baseline. Furthermore, an endothermic amount at temperatures equal to or higher than 141 °C, which corresponds to the equilibrium melting point of polyethylene, and an endothermic amount at temperatures lower than 141 °C were determined.

(3) Air Permeation Resistance

For the measurement of air permeation resistance in which a degree of increase in air permeation resistance was determined from the difference between the air permeation resistance of a polyolefin microporous membrane and the air permeation resistance of a laminated porous membrane, Gurley Type Densometer Model B, manufactured by TESTER SANGYO CO., LTD., was used. The polyolefin porous membrane or the laminated porous membrane was fixed between a clamping plate and an adapter plate so that no winkle occurred, and any 5 points in the membrane were measured in accordance with JIS P8117. An average value of the 5 points was used as an air permeation resistance [sec/100 cc Air].
A degree of increase in air permeation resistance was determined by the following equation.

```
Equation: Degree of Increase in Air Permeation Resistance = Y
- X
```

where X is the air permeation resistance (sec/100 cc Air) of the polyolefin porous membrane; and
Y is the air permeation resistance (sec/100 cc Air) of the whole of a battery separator.

An air permeation resistance at the time when the membrane thickness is 12 $\mu$m refers to an air permeation resistance P2 that is calculated by Equation: P2 = (P1 $\times$ 12) / T1, where P1 is a measured air permeation resistance of a microporous membrane having a membrane thickness T1 ($\mu$m). Note that, hereinafter, unless the membrane thickness is otherwise specified, the term "air permeation resistance" means "air permeation resistance when the membrane thickness is 12 $\mu$m".

(4) Surface Roughness

Surface roughness was determined by measuring an arithmetic average roughness (Ra) by using an atomic force microscope (AFM SPA500, manufactured by SII). The range of the measurement was 4 $\times$ 4 $\mu$m$^2$. A remolten surface of a gel-like sheet was subjected to the measurement, and the result was evaluated as surface roughness. In the case where both surfaces of the gel-like sheet were remelted, the average of the surface roughnesses of both surfaces was used. Furthermore, by observing the remolten surface of the polyolefin microporous membrane, the average surface roughness of the microporous membrane was calculated.

(5) Heat Shrinkage Rate (105 °C, 8 hours)

Heat shrinkage rate (105 °C, 8 hours) was measured using a clean oven (PVHC-210, manufactured by Tabai Espec Corp). A sample having a 50-mm square shape was punched out from a polyolefin microporous membrane, and the dimensions of the sample in the MD and the TD were measured before and after heat-treatment performed in the oven at 105 °C for 8 hours, and heat shrinkage rates in both the MD and the TD were determined from the following equation.

$$\text{Equation: Shrinkage Rate (\%)} = (\text{Original Dimension} - \text{Dimension after Heat Shrinkage}) \text{ / Original Dimension} \times 100$$

(6) Heat Shrinkage Rate (120 °C)

Using TMA/SS 6100, manufactured by Seiko Instruments Inc., heat shrinkage rates (120 °C) in both the MD and the TD were determined from the following equation. A sample having a width of 3 mm and a length of 100 mm was cut out of the polyolefin microporous membrane. The measurement was conducted in such a manner that, the temperature was raised from 30 °C to 210 °C under a fixed load (19.6 mN), and the shrinkage rate of the sample at the time when the temperature reached 120 °C was evaluated as the 120 °C heat shrinkage of the polyolefin microporous membrane.

$$\text{Equation: Shrinkage Rate (\%)} = (\text{Original Dimension} - \text{Dimension after Heat Shrinkage}) \text{ / Original Dimension} \times 100$$

(7) Porosity

Using the following equation, porosity was calculated from the mass w1 of the microporous membrane and the mass w2 of a membrane having no pore and formed of the same polyethylene composition and having the same size as those of the microporous membrane.

$$\text{Equation: Porosity (\%)} = (w2 - w1) \text{ / } w2 \times 100$$

(8) Pin Puncture Test

Pin puncture strength when the membrane thickness was taken as 20 $\mu$m was determined in such a manner that a maximum load at the time when the microporous membrane having a membrane thickness T1 ($\mu$m) was punctured at a speed of 2 mm/second with a 1-mm-diameter needle having a spherical tip (curvature radius R: 0.5 mm) was measured, and using Equation: L2 = (L1 $\times$ 20) / T1, a measured value L1 (gf) of the maximum load was converted into a maximum load L2 when the membrane thickness was taken as 20 $\mu$m. The result was evaluated in accordance with the following criteria.

⊙ (good): pin puncture strength of equal to or higher than 350 gf
○ (fair): pin puncture strength of equal to or higher than 300 gf and lower than 350 gf
× (poor): pin puncture strength of lower than 300 gf

(9) Maximum Pore Size

Equation: The maximum pore size of the microporous membrane was measured by a method (bubble point method) in accordance with ASTM F316-86. Note that, as a measuring apparatus, a perm porometer manufactured by Porous Materials Inc. (model number: CFP-1500A) was used, and as a measuring liquid, Galwick was used.

(10) Meltdown Temperature

The meltdown temperature of the polyolefin microporous membrane was measured by thermo-mechanical analysis (TMA). Samples each having a width of 3 mm and a length of 100 mm were cut out of the polyolefin microporous membrane so that some of the samples have a long side extending in the TD and others have a long side extending in the MD, and the temperature was raised from 30 °C at 5 °C/min. A temperature at which the sample was melt and ruptured was defined as a meltdown temperature.

(11) Melting Point

Using a differential scanning calorimeter (DSC) DSC 6220, manufactured by SII NanoTechnology Inc., 5 mg of a resin sample was heated in a nitrogen gas atmosphere at a temperature rate of 10 °C/min. The peak temperature of a melting peak observed at this time was used as a melting point.

(12) Mw and MWD

The Mws of UHMWPE and HDPE were determined by gel permeation chromatography (GPC) under the following conditions.

- Measuring Apparatus: GPC-150C, manufactured by Waters Corporation
- Column: Shodex UT806M, manufactured by Showa Denko K.K.
- Column Temperature: 135 °C
- Solvent (Mobile Phase): o-dichlorobenzene
- Solvent Flow Rate: 1.0 ml/min
- Sample Concentration: 0.1 wt% (Dissolution Condition: 135 °C/1 h)
- Injection Amount: 500 $\mu$l
- Detector: differential refractometer (RI detector) manufactured by Waters Corporation
- Calibration Curve: produced, using a predetermined conversion constant, from a calibration curve obtained using a monodisperse polystyrene standard sample.

(13) Thickness Measurement

The membrane thicknesses at 5 points in a region of 95 mm $\times$ 95 mm of the microporous membrane were measured by a contact thickness meter (LITEMATIC, manufactured by Mitutoyo Corporation), and the average of the membrane thicknesses was determined.

(14) SEM

The surface of the microporous membrane was observed using a field emission type scanning electron microscope (JSM-6701F, manufactured by JEOL Ltd). The microporous membrane was subjected to Pt-deposition (ion sputtering: sputtering current 20 mA, time 20 seconds) beforehand, and the surface thereof was observed under an accelerating voltage of 2.00 keV. The measurement sample used for the sectional observation was produced by cutting off a microporous membrane by using an ion milling system (IM4000, manufactured by Hitachi High-Technologies Corporation). The Pt-deposition was conducted in the same manner as in the surface observation.

(15) Peel Strength of Porous Layer and Multilayer Porous Membrane (Tape Peel Force)

(Production of Peel Test Piece)

Laminated porous membranes (120 mm in the machine direction $\times$ 25 mm in the width direction) produced in Examples and Comparative Examples were each disposed on a glass plate so as to keep out air. A double-sided adhesive tape (SFR-2020, transparent film type double-sided adhesive tape, 100 mm in the machine direction $\times$ 20 mm in the width direction, manufactured by Seiwa Industry Co., Ltd.) was disposed so that the machine direction of the double-sided adhesive tape was aligned with the machine direction of a separator, and on the upper side of the laminate, a rubber roller having a weight of 2 kg (SA-1003-B, hand operation type, rubber strength of 80$\pm$5 Hs, manufactured by TESTER SANGYO CO., LTD.) was reciprocated 5 times to pressure-bond the membrane and the tape. On the separator-side surface of the resultant laminated body formed of the double-sided adhesive tape and the laminated porous membrane, a cellophane adhesive tape (CELLOTAPE (registered trademark), No. 405, plant-derived, 100 mm in the machine direction × 15 mm in the width direction, manufactured by Nichiban Co., Ltd.) was attached in a range of approximately 90 mm in the machine direction, while a strip of paper cut to be 120 mm in the machine direction × 25 mm in the width direction was attached to the remaining approximately 10-mm portion of the cellophane adhesive tape. The 2-kg rubber roller was reciprocated 5 times to pressure-bond them. A release liner of the double-sided adhesive tape was peeled off, and the laminated body was attached to a SUS plate (3 mm in thickness, 150 mm in length, 50 mm in width) so that the machine direction of the laminated porous membrane and the longitudinal direction of the SUS plate were in parallel, and the 2-kg rubber roller was reciprocated 5 times to pressure-bond them. A peel test piece was thus produced.

(Method for Measuring Tape Peel Force)

Using a universal testing machine (AGS-J, manufactured by SHIMADZU CORPORATION), the strip of paper cut to be 120 mm in the machine direction × 25 mm in the width direction and attached to the cellophane adhesive tape was sandwiched by a chuck on the load cell side, and furthermore, the SUS plate was sandwiched by a lower chuck on the opposite side to the chuck on the load cell side, and then a 180-degree peel test was conducted at a test speed of 100 mm/min. A value obtained by averaging values measured with strokes of 20 mm to 70 mm during the peel test was regarded as the peel force of the peel test piece. Three peel test pieces in total were subjected to the measurement, and the average of the peel force was regarded as a tape peel force.

Note that, in a peel interface, the porous layer sometimes remains on the multilayer porous membrane side. Also in this case, the peel force was calculated as the peel strength of the porous layer and the polyolefin multilayer microporous membrane.

[Examples 1 to 3]

To a polyethylene resin (melting point: 135 °C, crystal dispersion temperature: 90 °C) comprising 70 parts by weight of a high-density polyethylene having an Mw of $5.6 \times 10^5$ and an MWD of 4.05 and 30 parts by weight of an ultrahigh molecular weight polyethylene having an Mw of $1.9 \times 10^6$ and an MWD of 5.09, 0.08 part by weight of a phenol-based antioxidant and 0.08 part by weight of a phosphorus-based antioxidant were added relative to 100 parts by weight of the polyethylene resin to obtain a polyethylene resin composition. Subsequently 28.5 parts by weight of the resultant polyethylene resin composition was fed into a twin-screw extruder (strong-blending type segment), and, from the side-feeder of the twin-screw extruder, 71.5 parts by weight of liquid paraffin was supplied, and the mixture was melt-kneaded at 300 rpm at 190 °C to prepare a polyethylene resin solution in the extruder.

The thus-prepared polyethylene resin composition solution was extruded at 240 °C from a T-die mounted at an end of the twin-screw extruder, and taken up with a cooling roll to form a gel-like sheet (330 mm in width). This gel-like sheet was introduced into a stretching machine equipped with a heating furnace as illustrated in Fig. 1, and subjected to 5 × 5-fold simultaneous biaxial stretching. The surface temperature of the gel-like sheet was measured using a radiation thermometer in a non-contact manner. This stretched gel-like sheet was immersed in a methylene chloride bath whose temperature had been adjusted to 25 °C, and the liquid paraffin was removed until the amount of the liquid paraffin present in the gel-like sheet becomes equal to or less than 1% by volume. Subsequently, the resultant sheet was air-dried at room temperature for 24 hours. The dried gel-like sheet was heat-treated in the furnace at 120 °C for 10 minutes to produce a polyethylene microporous membrane. Table 1 lists the average temperatures inside the stretching machine, the temperatures of the gel-like sheets immediately before stretching, preheat temperatures, the thicknesses of the gel-like sheets, conveyance speeds, and membrane thicknesses, in Examples. Table 2 lists physical properties, such as shutdown temperature and air permeation resistance, of Examples.

[Example 4]

(Preparation of Coating Solution)

As a fluororesin, a polyvinylidene fluoride-hexafluoropropylene copolymer (VdF/HFP = 92/8 (weight ratio), weight-average molecular weight: 1,000,000) was used. The fluororesin, alumina particles having an average size of 0.5 μm, and N-methyl-2-pyrrolidone were mixed so that the alumina particles were contained in 52% by volume and 17% by weight solid concentration, relative to the total of the fluororesin and the alumina particles. The resin component was completely dissolved, and subsequently, the resultant solution was introduced into a polypropylene container together with zirconium oxide beads ("Torayceram" (registered trademark) beads, 0.5 mm in diameter, manufactured by Toray Industries), and dispersed for 6 hours by using a paint-shaker (manufactured by Toyo Seiki Seisaku-sho, Ltd). Subsequently, the resultant mixture was filtered through a filter with filtering limit of 5 μm to prepare a coating solution (a). Until applied, the coating solution (a) was hermetically stored so as to minimize exposure to the outside air.

(Lamination of Porous Layers)

The coating solution (a) was applied by an immersion coating method onto both surfaces of a polyolefin microporous membrane produced under the same conditions as in Example 2, and subsequently passed through a humid zone filled with atomized water droplets at a temperature of 25 °C for 2 seconds, and subsequently, 0.5 second later, placed into an aqueous solution (coagulation bath) for 3 seconds, washed with pure water, and then dried by passing through a hot-air drying furnace at 70 °C to obtain a multilayer porous membrane having a final thickness of 19.5 μm.

[Comparative Examples 1 to 3]

As listed in Table 1, polyolefin microporous membranes were produced in such a manner that the average temperatures inside the stretching machine, the temperatures of the gel-like sheets immediately before stretching, and preheat temperatures were lower than those in Examples 1 to 3.

[Comparative Example 4]

A multilayer porous membrane was produced in the same manner as in Example 4, except that, as the polyolefin microporous membrane, a polyolefin microporous membrane produced under the same conditions as in Comparative Example 3 was used.

Table 2 lists the melting heat quantity ($\Delta H_{<141°C}$, $\Delta H_{\geq141°C}$) of polyethylene microporous membranes according to Examples and Comparative Examples. Any of the polyethylene microporous membranes according to Examples 1 to 3 has a $\Delta H_{<141°C}$ of equal to or larger than 95%.

Table 2 reveals that the polyethylene microporous membranes according to Examples 1 to 3 have an equal level of air permeation resistances or lower than those in Comparative Examples 1 to 3, and had respective shutdown temperatures lower than those in Comparative Examples 1 to 3.

Table 3 lists the results of determination of degrees of increase in air permeation resistance from the difference between the air permeation resistance of the polyolefin microporous membrane of Example 2 and the air permeation resistance of the laminated porous membrane of Example 4 and the difference between the air permeation resistance of the polyolefin microporous membrane of Comparative Example 3 and the air permeation resistance of the laminated porous membrane of Comparative Example 4.

Table 3 reveals that there is little difference in peel strength between Example 4 and Comparative Example 4, but, when the polyolefin microporous membrane of Comparative Example 3 was provided with a porous layer, the air permeation resistance increased by approximately 10%, whereas, even when the polyolefin microporous membrane of Example 2 according to the present invention was provided with a porous layer, the air permeation resistance increased by only 2%, and thus, a degree of increase in air permeation resistance was kept small.

[Table 1]

|  | Example 1 | Example 2 | Example 3 | Comparative Example 1 | Comparative Example 2 | Comparative Example 3 |
|---|---|---|---|---|---|---|
| Average Temperature inside Stretching Machine (°C) | 121.5 | 121.2 | 120.6 | 117.9 | 119.3 | 118.2 |
| Temperature immediately before Stretching (°C) | 118 | 120 | 118 | 111 | 113 | 114 |
| Preheat Temperature (°C) | 135 | 135 | 130 | 123 | 125 | 125 |
| Thickness of Gel-like Sheet (μm) | 800 | 1200 | 1200 | 800 | 800 | 800 |
| Conveyance Speed (m/min) | 45 | 25 | 25 | 45 | 45 | 25 |
| Membrane Thickness (μm) | 10.99 | 15.73 | 16.54 | 11.14 | 12.27 | 17.07 |

[Table 2]

| | Example 1 | Example 2 | Example 3 | Comparative Example 1 | Comparative Example 2 | Comparative Example 3 |
|---|---|---|---|---|---|---|
| $(\Delta H_{\geq 141°C}/\Delta H_{all}) \times 100$ | 3.4 | 4.0 | 3.3 | 10.4 | 15.4 | 12.7 |
| $(\Delta H_{<141°C}/\Delta H_{all}) \times 100$ | 96.6 | 96.0 | 96.7 | 89.6 | 84.6 | 87.3 |
| $\{(\Delta H_{135°C-140°C}-\Delta H_{140°C-145°C})/\Delta H_{all}\} \times 100$ | 33 | 32 | 33 | 19 | 24 | 24 |
| $(\Delta H_{130°C-135°C}/\Delta H_{all}) \times 100$ | 30 | 30 | 29 | 20 | 22 | 22 |
| Shutdown Temperature (°C) Imp Measurement | 131.7 | 130.75 | 131.15 | 135.15 | 134.6 | 134.9 |
| Air Permeation Resistance (sec/100 cc Air) at 12 $\mu$m | 145.3 | 107.8 | 135.9 | 151.9 | 151.0 | 127.7 |
| Porosity (%) | 40.2 | 45.9 | 42.3 | 41.7 | 42.1 | 45.5 |
| Pin Puncture Strength (gf/20 $\mu$m) | ⊙ | ○ | ⊙ | ⊙ | ⊙ | ⊙ |
| Heat Shrinkage (%) 105 °C/8 hr | | | | | | |
| MD | 5.0 | 5.5 | 5.1 | 5.5 | 6.1 | 6.9 |
| TD | 2.6 | 3.1 | 2.5 | 2.9 | 3.3 | 3.2 |
| Maximum Pore Size (nm) | 51.8 | 50.5 | 54.6 | 41.5 | 45.2 | 55.3 |
| Heat Shrinkage (%) 120 °C | | | | | | |
| MD | -1.4 | -0.9 | 1.2 | 2.3 | 1.3 | 3.6 |
| TD | -1.6 | -0.9 | -0.2 | -0.4 | 0.4 | 0.9 |
| Meltdown Temperature (°C) | | | | | | |
| MD | 144 | 146.3 | 147.3 | 148.8 | 148.1 | 149 |
| TD | 146.5 | 147.8 | 148.4 | 148.9 | 148.4 | 149.9 |
| Surface Roughness (nm) | 71.0 | 306.0 | 140.5 | 13.1 | 13.2 | 21.4 |
| Pin Puncture Strength | ⊙ | ○ | ⊙ | ⊙ | ⊙ | ⊙ |
| Surface Area (4 × 4 $\mu$m$^2$) ($\mu$m$^2$) | 25.56 | 32.67 | 27.80 | 16.73 | 16.80 | 19.44 |
| Melting Point (°C) | 136.0 | 135.8 | 136.0 | 136.8 | 136.6 | 136.6 |

[Table 3]

|  |  | Example 4 | Comparative Example 4 |
|---|---|---|---|
| Before Application | Air Permeation Resistance (sec/100 cc Air) | 151 | 202 |
|  | Thickness ($\mu$m) | 16.3 | 16.7 |
|  | Air Permeation Resistance (sec/100 cc Air) at 12 $\mu$m | 111.18 | 145.38 |
| After Application | Air Permeation Resistance (sec/100 cc Air) | 184 | 253 |
|  | Thickness ($\mu$m) | 19.5 | 19.5 |
|  | Air Permeation Resistance (sec/100 cc Air) at 12 $\mu$m | 113.16 | 155.52 |
|  | Weight Per Area ($5 \times 5$ cm$^2$) (g) | 0.0299 | 0.0296 |
|  | Peel Strength (mN/mm) | 524 | 506 |
| Degree of Increase in Air Permeation Resistance (sec/100 cc Air) at 12 $\mu$m | | 2.0 | 10.1 |

Description of Reference Signs

10 preheating furnace

20 stretching furnace

30 thermal-fixing furnace

40 tenter stretching machine

**Claims**

1. A polyolefin microporous membrane comprising a polyethylene resin composition as a main component, the membrane having, when a temperature is raised to 230 °C at a temperature rise rate of 10 °C/min in differential scanning calorimetry (DSC), a ratio of melting heat quantity ($\Delta H_{<Tm0}$) of equal to or larger than 95% at temperatures lower than an equilibrium melting point of polyethylene, relative to 100% of a total melting heat quantity ($\Delta H_{all}$).

2. The polyolefin microporous membrane according to claim 1, wherein when the temperature is raised to 230 °C at a temperature rise rate of 10 °C/min in DSC, a melting heat quantity at temperatures equal to or higher than 135 °C and lower than 140 °C ($\Delta H_{135-140°C}$) is larger than a melting heat quantity at temperatures equal to or higher than 140 °C and lower than 145 °C ($\Delta H_{140-145°C}$) by 25% or more relative to 100% of the total melting heat quantity ($\Delta H_{all}$).

3. The polyolefin microporous membrane according to claim 1 or 2, wherein the membrane has, when the temperature is raised to 230 °C at a temperature rise rate of 10 °C/min in DSC, a melting heat quantity of equal to or larger than 23% at temperatures equal to or higher than 130 °C and lower than 135 °C ($\Delta H_{130-135°C}$), relative to 100% of the total melting heat quantity ($\Delta H_{all}$).

4. The polyolefin microporous membrane according to any one of claims 1 to 3, wherein the membrane has, when the temperature is raised to 230 °C at a temperature rise rate of 10 °C/min in DSC, a ratio of a melting heat quantity ($\Delta H_{\geq Tm0}$) of equal to or larger than 2% at temperatures equal to or higher than the equilibrium melting point of polyethylene, relative to 100% of the total melting heat quantity ($\Delta H_{all}$).

5. The polyolefin microporous membrane according to any one of claims 1 to 4, wherein
in a part or a whole of at least one surface of the polyolefin microporous membrane, an aggregate of a plurality of curved leaf-like structures that irregularly combine with each other is formed, and
a surface portion in which the aggregate of the leaf-like structures is formed has a surface roughness of equal to or larger than 40 nm.

6. The polyolefin microporous membrane according to any one of claims 1 to 5, wherein the polyethylene resin composition includes an ultrahigh molecular weight polyethylene and a high-density polyethylene.

7. The polyolefin microporous membrane according to any one of claims 1 to 6, wherein an ultrahigh molecular weight polyethylene content is equal to or more than 10%, relative to 100 parts by weight of a polyethylene resin included in the polyethylene resin composition.

8. The polyolefin microporous membrane according to any one of claims 1 to 7, wherein the polyethylene resin composition does not include one of a copolymer of ethylene and an $\alpha$-olefin other than ethylene and a linear low-density polyethylene.

9. The polyolefin microporous membrane according to any one of claims 1 to 8, wherein polyethylene included in the polyethylene resin composition is an ultrahigh molecular weight polyethylene and a high-density polyethylene.

10. A multilayer porous membrane in which a porous layer is laminated on at least one surface of the polyolefin microporous membrane according to any one of claims 1 to 9.

11. The multilayer porous membrane according to claim 10, wherein the porous layer includes a fluororesin.

12. The multilayer porous membrane according to claim 11, wherein the porous layer further includes a filler.

13. A battery separator comprising the polyolefin microporous membrane according to any one of claims 1 to 12.

14. A battery comprising the battery separator according to claim 13.

15. A method for producing a polyolefin microporous membrane, the method comprising stretching a gel-like sheet obtained by extrusion-molding an ethylene resin composition, while heating the sheet so that an average temperature of the whole gel-like sheet reaches a temperature equal to or higher than "a polyethylene melting point - 10 °C" and lower than the melting point at a time of preheating and stretching.

FIG. 1

FIG. 2

FIG. 3

EP 3 438 177 A1

FIG. 4

EXAMPLE 1

FIG. 5

FIG. 6

## INTERNATIONAL SEARCH REPORT

| International application No. |
|---|
| PCT/JP2017/012191 |

**A. CLASSIFICATION OF SUBJECT MATTER**

*C08J9/28*(2006.01)i, *C08J9/00*(2006.01)i, *C08L23/06*(2006.01)i, *H01M2/16*(2006.01)i

According to International Patent Classification (IPC) or to both national classification and IPC

**B. FIELDS SEARCHED**

Minimum documentation searched (classification system followed by classification symbols)
C08J9/28, C08J9/00, C08L23/06, H01M2/16

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-196508 A (Toray Battery Separator Film Co., Ltd.), | 1-3,5-9,13, 14 |
| Y | 16 October 2014 (16.10.2014), | 10-12 |
| A | claims 1, 5, 6; paragraphs [0021], [0024], [0029], [0032], [0085], [0103]; table 1; fig. 1, 2 | 4,15 |
| | & US 2012/0028131 A1 | |
| | claims 1, 6, 8; paragraphs [0026], [0034], [0037], [0041], [0094], [0112]; table 1; fig. 1, 2 | |
| | & US 2012/0028101 A1    & US 2012/0028102 A1 | |
| | & US 2012/0034518 A1    & US 2012/0034519 A1 | |
| | & US 2012/0040232 A1 | |

☒ Further documents are listed in the continuation of Box C. ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 14 June 2017 (14.06.17) | 27 June 2017 (27.06.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

## INTERNATIONAL SEARCH REPORT

| | International application No. |
|---|---|
| | PCT/JP2017/012191 |

**C (Continuation).   DOCUMENTS CONSIDERED TO BE RELEVANT**

| Category* | Citation of document, with indication, where appropriate, of the relevant passages | Relevant to claim No. |
|---|---|---|
| Y | WO 2014/076994 A1  (Toray Battery Separator Film Co., Ltd.), 22 May 2014 (22.05.2014), claims 1, 4, 5; paragraphs [0073], [0074] & US 2014/0315065 A1 claims 1, 4, 5; paragraphs [0087] to [0092] & EP 2750216 A1          & CN 104823304 A & KR 10-1378051 B | 10-12 |
| X Y | JP 2012-500130 A  (Toray Tonen Specialty Separator Godo Kaisha), 05 January 2012 (05.01.2012), claims 1, 3, 4, 6; paragraphs [0040] to [0053], [0089], [0097] & WO 2010/018749 A1 claims 1, 3, 4, 6; paragraphs [0040] to [0053], [0089], [0097] | 1-9,13-15 10-12 |
| A | JP 2011-526547 A  (Toray Tonen Specialty Separator Godo Kaisha), 13 October 2011 (13.10.2011), claims 11, 15; paragraphs [0049], [0076] & WO 2010/001722 A2 claims 11, 15; paragraphs [0049], [0076] | 1-15 |
| A | WO 2007/060990 A1  (Tonen Chemical Corp.), 31 May 2007 (31.05.2007), claims; paragraphs [0113], [0114], [0115]; table 1; fig. 1, 2 & US 2010/0069596 A1 claims; paragraphs [0171], [0172], [0173]; table 1; fig. 1, 2 | 1-15 |
| A | WO 2007/060991 A1  (Tonen Chemical Corp.), 31 May 2007 (31.05.2007), claims; paragraphs [0111], [0112], [0113]; table 1; paragraph [0114] & US 2009/0042008 A1 claims; paragraphs [0168], [0169], [0170]; table 1 | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013126765 A
- JP 2132327 A
- JP 3347835 B
- JP 2002256099 A